# EUROPEAN PATENT APPLICATION

(11) **EP 1 085 740 A2**
(43) Date of publication of application: **21.03.2001**
(21) Application number: 00119925.6
(22) Date of filing: 13.09.2000
(51) Int. Cl.: H04N 1/00, H04N 1/32

(54) **A static image printout system, a method for printing out static image, and an information providing medium**

(30) Priority: 13.09.1999 JP 25915699
(71) Applicant: SONY CORPORATION, Tokyo (JP)
(72) Inventor: Kori, Teruhiko, Sony Corporation, Shinagawa-ku, Tokyo (JP); Fujii, Asako, Sony Corporation, Shinagawa-ku, Tokyo (JP)
(74) Representative: Melzer, Wolfgang, Dipl.-Ing.

(57) **Abstract**

The system of the present invention includes an information providing medium for providing video image data or still image data, to which a print control descriptor is added, as to the printout of the static image, a printer for printing out the static image based on the video image data or still image data obtained from the information providing medium, and a static image print control device for detecting a print permission flag for the static image from the print control descriptor added to the video image data or still image data, and controlling the printer to print out the static image based on the print permission flag thereof. The printer is permitted to print out the static image only when the print permission flag is written into the print control descriptor by the visual image information provider. When non-permission for printing the static image is written into the print control descriptor, the printout by the printer is inhibited. With this arrangement, the copyright of the visual image information provider for the static image extracted from the video image data or still image data can be protected.

## Description

### BACKGROUND OF THE INVENTION

### 1. Field of the Invention

The present invention relates to: a static image printout system preferable for use in a static image data service in which an arbitrary static image is extracted from video image information and still image information in digital broadcasting media and video image information and still or static image information in digital recording media such as magneto-optical discs is printed out, a method for printing out a static image, and an information providing medium.

Specifically, the static image printout system includes a static image print controlling device which detects print permitting information for a static image beforehand from a print control descriptor added to video image information or static image information. Based on the print permitting information for the static image, the print controlling device controls the printing of the static image. Printing is permitted only in the case where the visual information provider writes the print permitting information for the static image into the print control descriptor. In this manner, the copyright of the visual information provider who provides the static image extracted from the video information or static image information can be protected.

### 2. Description of the Related Art

In recent years, in accordance with the advancement in digital broadcasting media and digital recording media, there is expanding use of contents distribution system in which video image information obtained by compressing various visual images and three-dimensional images in Moving Picture Experts Group Phase system and static image information obtained by compressing various visual images and three-dimensional imaged in Joint Photographic Experts Group system are sold in tele-shops or internet-shops.

In this contents distribution system, a copy control descriptor is added to the video image information and static image information, in order to protect the copyright of the visual information provider. Based on the copy control descriptor, the copying of the video image information or static image information is restricted.

In the Copy Generation Management System (CGMS) for example, when "one copy permitted" is written into the copy control descriptor, it is permitted to make one copy of the video image information or static image information received by a digital broadcasting receiving device to the visual image recording and reproducing device only once. Making two or more copies is not permitted.

In a conventional contents distribution system, there is a demand for a static image data service capable of providing printed items such as various gift tickets (i.e. coupons), admission tickets for various kinds of entertainment, travel tickets (airline tickets), and copied pictures (including pictures of characters) to visual information users through tele-shops and internet shops.

In a method for satisfying this demand, it is considered to control printing by use of a copy control descriptor such as that used in the CGMS. The copy control descriptor, however, is not intended to printout the above-described printed items as static images, and therefore, it is difficult to accurately control the number of times that the static images are printed. When such a service as described above is offered, controlling printing of images is important. Otherwise, a problem arises that the images are copied freely and the copyright of the visual image information provider is seriously infringed.

The present invention has been made to solve the problems of the prior art, and the objective thereof is to provide a static image printout system capable of protecting the copyright of the visual image information provider who provides static images extracted from video image information or static image information in a static image data service, a method for printing out the static image, and an information providing medium.

### SUMMARY OF THE INVENTION

According to an aspect of the present invention, a static image printout system includes: an information providing medium for supplying video information or static image information to which a print control descriptor as information for distinguishing whether or not printing of a static image is permitted or not is added; a printer for printing the static image extracted from the video image information or the static image information provided by the information providing medium; and a static image print control device for detecting the print permitting information for the static image from the print control descriptor added to the video image information or the static image information, and for conducting printout control over the printer based on the print permitting information for the static image.

In the static image printout system according to the present invention, when video image information or static image information to which print control descriptor is added is provided from the information providing medium, in the static image print control device, the extractor extracts, for example, the static image of an arbitrary image scene from the video image information or arbitrary static image from the static image information in accordance with the preference of the user. On the other hand, the print permission for the static image is detected from the print control descriptor added to the video image information or static image information by the detector.

The static image extracted from the video image information or the static image extracted from the static image information by the extractor is printed out by the printer under printout control by the static image print control device based on the print permitting information for the static image detected by the detector.

In only the case where the video information provider writes the print permitting information for the static image into the print control descriptor, the static image print control device permits the printer to printout the static image. In the case where the video information provider writes the print non-permission information for the static image into the print control descriptor, the static image print control device inhibits the printer to printout the static image. In this manner, the copyright of the visual image information provider for the static image extracted from the video image information or static image information is protected.

According to another aspect of the present invention, a method for printing out a static image according to the present invention includes: adding a print control descriptor as information for distinguishing whether or not printing of a static image is permitted or not to a video image information or static image information by a visual image information provider, and providing the video image information or the static image information to a visual image information user: detecting print permitting information for the static image from the print control descriptor added to the video image information or the static image information, and at the same time, extracting a static image of an arbitrary visual image scene from the video image information or an arbitrary static image from the static image information; and when the print permitting information for the static image is detected, printing out the static image extracted from the visual image information or the static image extracted from the static image information.

In the static image printout method according to the present invention, the printout is permitted to the visual image information user in only the case where the print permitting information for the static image is written into the print control descriptor by the visual image information provider. In the case where the print non-permitting information for the static image is written into the print control descriptor, the visual image information user is not permitted to printout the static image. In this manner, the copyright of the visual image information provider for the static image extracted from the video image information or static image information can be protected.

An information providing medium according to the present invention records video image information or static image information to which a print control descriptor as information for distinguishing whether or not printing of a static image is permitted or not is added.

According to still another aspect of the present invention, by use of an information providing medium, the copyright of the visual image information provider for the static image extracted from the video image information or static image information can be protected

### BRIEF DESCRIPTION OF THE DRAWINGS

FIG. 1 is a block diagram showing an exemplary structure of a static image printout system 100 according to an embodiment of the present invention;
FIG. 2 is a flow chart illustrating an exemplary processing by a static image printout method according to an embodiment of the present invention;
FIG. 3 is a block diagram showing an exemplary structure of a static image printout system 101 according to the first embodiment of the present invention;
FIG. 4 is an image diagram showing an exemplary data structure of MPEG2-TS;
FIG. 5 is an image diagram showing an exemplary structure of the print control descriptor;
FIG. 6 is a block diagram showing an exemplary structure of the static image printout system according to the second embodiment of the present invention;
FIG. 7 is an image diagram showing an exemplary structure of the static image high speed transmission data;
FIG. 8 is a block diagram showing an exemplary structure of the static image printout system 103 according to the third embodiment of the present invention;
FIG. 9 is an image diagram showing an exemplary structure of the digital copy control descriptor; and
FIG. 10 is a block diagram showing an exemplary structure of the static image printout system 103 at the time when a static image is output.

### DETAILED DESCRIPTION OF THE INVENTION

Hereinafter, the static image printout system, the static image printout method, and the information providing medium according to embodiments of the present invention will be described referring to drawings.

### (1) Embodiment

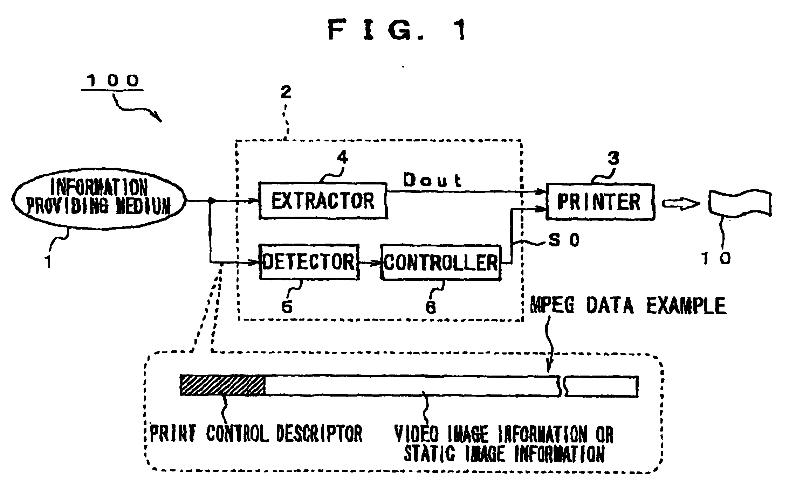

Fig. 1 is a block diagram showing an exemplary structure of a static image printout system 100 according to an embodiment of the present invention.

In this embodiment, the system includes a static image print control device which detects print permitting information for a static image from the print control descriptor added to the video image information or static image information beforehand. Based on the detected print permitting information for the static image, the static image print control device controls printout. The printer is permitted to printout only in the case where the video image information provider writes print permitting information for the static image into the print control descriptor. In this manner, the copyright of the video image information provider for the static image, which is extracted from the video image information or the still or static image information, is protected.

In the static image printout system 100 of Fig. 1, a static image 10 extracted from the video image information or the still or static image information is printed out under specific conditions. Therefore, it is essential for the static image printout system 100 to have an information providing medium 1 for providing video image information or still or static image information. Examples of the information providing medium 1 include CD-ROMs, digital broadcasting media where video image information or the static image information is transmitted to the visual image information user, and a digital recording media where video image information or static image information are recorded into magneto-optic discs beforehand.

A print control descriptor is added to the video image information or the static image information by the visual image information provider beforehand. The print control descriptor includes information for distinguishing whether or not the printing of the static image 10 is permitted. In this embodiment, a print permission flag (PPF) is defined as the print permitting information. When "1" is written into the print permission flag, a "permission to print the static image" is indicated. When "0" is written into the print permission flag, a "non-permission to print the static image" is indicated.

The print control descriptor is written into a header of a general purpose image format for video image information or static image information. In this embodiment, the print permission flag of the static image 10 is written into the print control descriptor, and the print permission number (PPN) N of the static image 10 is written into the print control descriptor. In the case where the print permission flag is "1" and the print permission number N is larger than "0" (N>0), "0" is rewritten into the print permission flag when the print permission number N becomes "0" by the visual image information user. The print permission flag is rewritten by a static image print control device 2.

A static image print control device 2 is coupled to the information providing medium 1, and a printer 3 is connected to the static image print control device 2. In this embodiment, the static image print control device 2 includes an extractor 4 for extracting a static image. The extractor 4 is operated in such a manner that a static image 10 of an arbitrary visual image scene is extracted from the video image information or an arbitrary static image 10 is extracted from the still or static image information in accordance with the preference of the visual image information user. The static image print control device 2 further includes at least a detector 5 for detecting a print permitting information. The detector detects a print permission flag of the static image 10 from the print control descriptor added to the video image information or the static image information.

A controller 6 is coupled to the detector 5. The detector 5 is controlled by the controller 6 in such a manner that the static image 10 extracted from the video image information by the extractor 4 described above, or the static image 10 extracted from the static image information, is printed out by the printer 3 based on the print permission flag of the static image 10 detected by the detector 5. The printer 3 prints out the static image 10 extracted from the video image information or the static image information provided by the information providing medium 1. When the print permission number N is written into the print control descriptor, the static image print controlling device 2 manages the print permission number N in such a manner that the print permission number N is decreased every time the static image 10 is printed.

As described above, in the static image printout system 100, when the print permission flag of "1" or "0" of the static image 10 is detected by the static image print control device 2 from the print control descriptor, the printout of the printer 3 can be controlled based on the print permission flag of the static image 10.

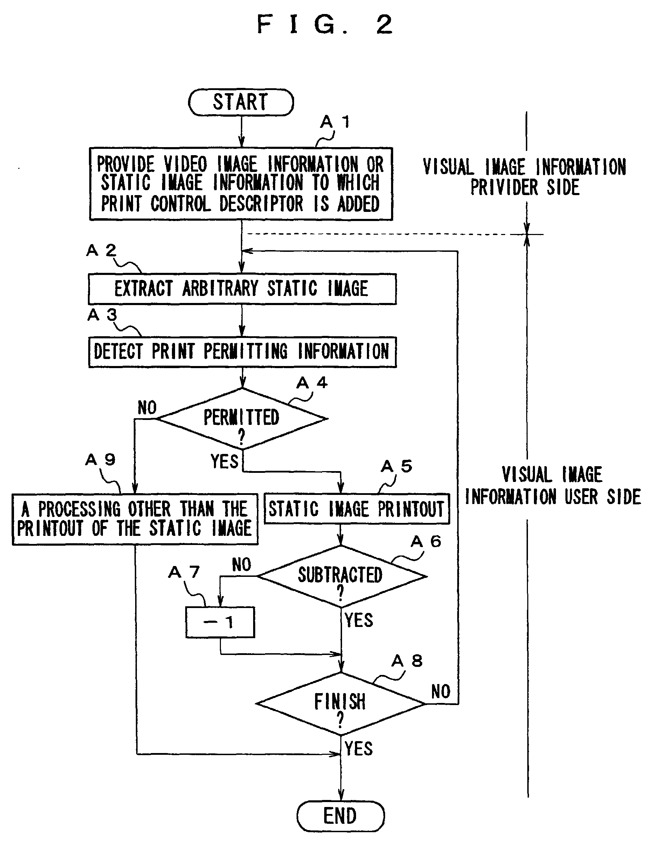

Next, an exemplary processing performed by the static image printout system 100 for printing out a static image according to an exemplary embodiment of the present invention will be described. Fig. 2 is a flow chart illustrating such exemplary processing.

In this embodiment, it is assumed that the print permission number N is defined as 10 (N-10) by the visual image information provider, and the print permission flag of the static image 10 has been added to the print control descriptor beforehand. It is also assumed that the video image information or static image information to which the print control descriptor, including the print permission number N written therein, is provided to the visual image information user, and that the print permission number N is decreased every time the static image 10 is printed. As an example of the information providing medium 1, a digital broadcasting media is employed.

Based on the above assumptions, a print control descriptor is added in step A1 in the flowchart of Fig. 2. Video image information is provided from the visual image information provider to the visual image information user through the digital broadcasting network. The video image information is sent after being multiplexed into MPEG data rows. Alternatively, the video image information obtained from a digital recording media may be provided. It is also possible that, instead of the video image information, the information providing medium 1 which treats the static image information itself may be provided.

At step A2, the visual image information user extracts an arbitrary static image 10 from the video image information. The visual image information user selects a scene and defines it as the static image 10 as seeing an unillustrated display. The selected scene is designated to the static image print control device 2 by use of a user interface.

In step A3, at the visual image information user side, the print permission flag PPF and the print permission number PNN of the static image 10 is detected from the print control descriptor which is added to the video image information in the static image print control device 2. The detection is conducted by the following exemplary procedure. The visual image information and the print control descriptor from the MPEG data obtained through the digital broadcasting are multiplexed and separated. Then, the print control descriptor is decoded to find out the print permission flag, which in this exemplary embodiment is "1," and the print permission number N, which in this exemplary embodiment is "10," of the static image 10. The print permission flag of "1" and the print permission number N of "10" are temporarily recorded in a resistor for exclusive use.

In step A4, the controller 6 determines whether or not printing of the static image is permitted by comparing the decoded print permission flag with reference data (i.e., an expected value) given to the controller 6 beforehand to determine whether they match. When the print permission flag of "1" is detected, the printout of the static image 10 by the printer 3 is permitted, and the procedure proceeds to step A5. If the print permission flag had been "0," printing of the static image 10 would have been inhibited.

In this embodiment, when the print permission flag of "1" is detected in step A4, a print permission signal S0 is output from the static image print control device 2 to the printer 3. The printer 3 is operated to print out the static image 10 of the extracted scene which is designated beforehand (step A2).

In step A6, it is determined whether or nor the number of printouts, which in this exemplary embodiment is one, have been subtracted from the print permitting number N in the static image print control device 2. This determination is made by comparing the print permission number N, in this case "10", with the total of the remaining number, in this case "9" plus the number of printouts, in this case "1". Since the total remaining number "9" plus the number of printouts "1" matches the print permission number "10," the number of printouts have been subtracted from the print permitting number N.

If the total remaining number of printouts had been "10" instead of "9," then the print permitting number "10" would be less than the total remaining number of printouts "10" plus the number of printouts "1." Then in step A6, it is determined that the number of printouts, which in this exemplary embodiment is "1," had not been subtracted from the print permitting number N of "10" and the procedure proceeds to step A7 where "1" is subtracted from the print permission number N. After that, the procedure proceeds to step A8 where it is determined whether the print control for the static image 10 is finished. This determination is made according to the instruction from the visual image information user. In this embodiment, if the entire print permission number N of "10" will be used, the procedure is returned to step A2 to use the remaining print permission number N of "9" and the visual image information user designates the next scene to be extracted to the static image print control device 2.

In the case where the static image print control device is designed so that all 10 of the extracted scenes are designated in step A2 beforehand, the procedure jumps to step A5 where the printer 3 can continuously print out the static images 10. In this way the predetermined number of printouts specified by a user can be continuously printed out. In this embodiment, "0" is rewritten into the print permission flag at the time when the print permission time N becomes "0". Therefore, if no print permission flag is detected at the time when the print permission number N becomes "0" and in step A4, for example, if the print permission flag of "0" is written, the printout of the static image 10 is inhibited. In this case, the procedure proceeds to step A9 where a processing other than the printout of the static image is conducted and the procedure is finished. The static image information D OUT for the selected scene for which print permission numbers of "10" or more is designated in step A2 is only displayed on the monitor.

As described above, in the static image printout system 100 which employs the static image printout method according to the exemplary embodiment of the present invention, the print permission signal S0 is output from the static image print control device 2 to the printer 3 in step A5 in the flowchart of Fig. 2 only when the visual image information provider writes the print permission flag of "1" into the print control descriptor. With this arrangement, the visual image information user can obtain the static image 10 of the selected scene which was designated beforehand.

Therefore, when the visual image information provider writes the print permission flag "0" into the print control descriptor, the printout of the static image is inhibited even though the extracted scene is designated in step A2 by the visual image information user. In this manner, the copyright of the visual image information provider for the video image information or static image information D OUT can be protected. In addition, since the print permission number N is decreased by 1 every time the static image 10 is printed, the static image 10 is never printed out beyond the print permission number N.

### (2) First embodiment

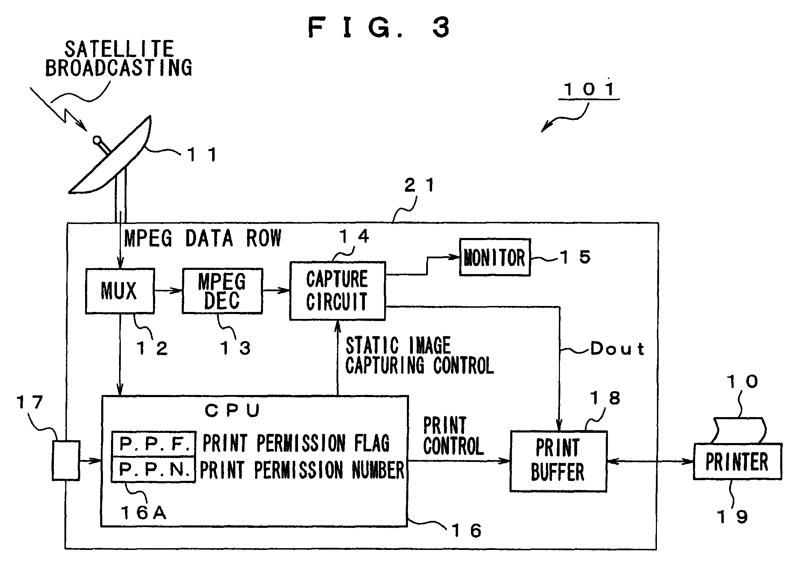

Fig. 3 is a block diagram showing an exemplary static image printout system 101 according to the first embodiment of the present invention.

In this embodiment, the function of the static image print control device 2 is incorporated into a set box 21 such as a digital television receiver shown in Fig. 3, and a printer 19 is coupled to the set box 21. The print permission flag of "1" for the static image is detected from the print control descriptor added to the video image information in MPEG compression system (hereinafter, referred to as MPEG video image information). Based on the print permission flag of "1" for the static image, the printout is conducted. The printer 19 is permitted to print out the static image only in the case where the print permission flag of "1" for the static image is written into the print control descriptor by the visual image information provider. In this manner, the copyright of the visual image information provider for the MPEG video image information can be protected.

The static image printout system 101 of Fig. 3 is preferable for use in a static image data service, and is used for printing out the static image 10 extracted from the MPEG video image information, such as various movies, under specific conditions. The static image printout system 101 includes the set box 21 such as a digital television receiver. An antenna 11 is mounted to the set box 21 to receive a satellite radio wave at a frequency of 12GHz such as the MPEG video image information compressed into MPEG data rows.

In the antenna 11, the received MPEG video image information is frequency-converted into an intermediate frequency signal (IF signal) of 1GHz band through a converter (not shown) with a low noise. The IF signal is amplified into 50 to 60dB and then is input into a multiplex separator (MUX) 12 where the MPEG compressed data rows (i.e. MPEG video image information) of a desired channel which has been multiplexed into a plurality of channels beforehand is multiplexed and separated. The multiplex separator 12 has a front end (not shown) and a transport unit (not shown.) In the front end, a carrier is selected from a plurality of carriers which are contained in the IF signal and are subjected to quadri-phase shift keying (QPSK) modulation. The selected carrier is subjected to quadrature demodulation. As a result, a transport stream after the QPSK demodulation is output from the front end to the transport unit. In the transport unit,, a desired channel is selected and separated from the channels multiplexed in the stream, and the selected channel is descrambled.

A CPU 16 as an example of a detector 5 and a controller 6 are connected to the multiplex separator 12. In the CPU 16, the print permission flag for the static image 10 if detected from the print control descriptor added to the MPEG video image information is stored. In this embodiment, the CPU (central processing unit) includes a RAM (a memory readable and writable at any time)16A., a print permission flag (P.P.F) and a print permission number (P.P.N) N are written into the RAM 16A. When the print permission flag of "1" is written, "permission to print out the static image" is shown. When the print permission flag of "0" is written, "non-permission to print out the static image" is shown. In the case where the print permission flag is "1" and the print permission time N is larger than 0, the print permission flag is rewritten into "0" at the visual image information user side when the print permission time N becomes "0".

An MPEG decoder 13 is connected, to the multiplex separator 12. In the MPEG decoder 13, the MPEG compressed data after multiplex separation is decoded and expanded to decode the MPEG, video image information and voice information. A capture circuit 14 containing a memory as an example of an extractor 4 is connected to the MPEG decoder 13. The MPEG decoder 13 is controlled in such a manner that a static image 10 of an arbitrary visual scene is extracted from the MPEG video image information. The static image 10 is extracted arbitrarily through the user's interface 17 connected to the CPU 16, and the capture circuit 14 is controlled to capture the static image 10 based on the operation information designated in accordance with the preference of the visual image information user., A monitor 15 is connected to the capture circuit 14. The monitor 15 displays the static image extracted from the MPEG video image information.

A print buffer 18 is connected to the CPU 16 and a printer 19 is connected to the print buffer 18. The printer 19 includes an image-forming device of electrophotographic type or ink-jet type. The printer 19 can print gift tickets (i.e. coupons) and other various tickets sold in on-line shops with high definition as well as characters displayed on the screen with high quality. The printer 19 is controlled to print out the static image 10 extracted from the MPEG video image information by the capture circuit 14 based on the print permission flag of "1" detected by the CPU 16. As a result, the printer 19 prints out the static image 10 extracted in accordance with the preference of the visual image information user from the MPEG video image information obtained by receiving the digital satellite radio wave. The CPU 16 manages the print permission number N of the static image 10 such that when the print permission number N is written into the print control descriptor, the print permission number N is decreased every time the static image 10 is printed. By managing the number of times the static image 10 is printed, it is possible to provide a service with more additional value.

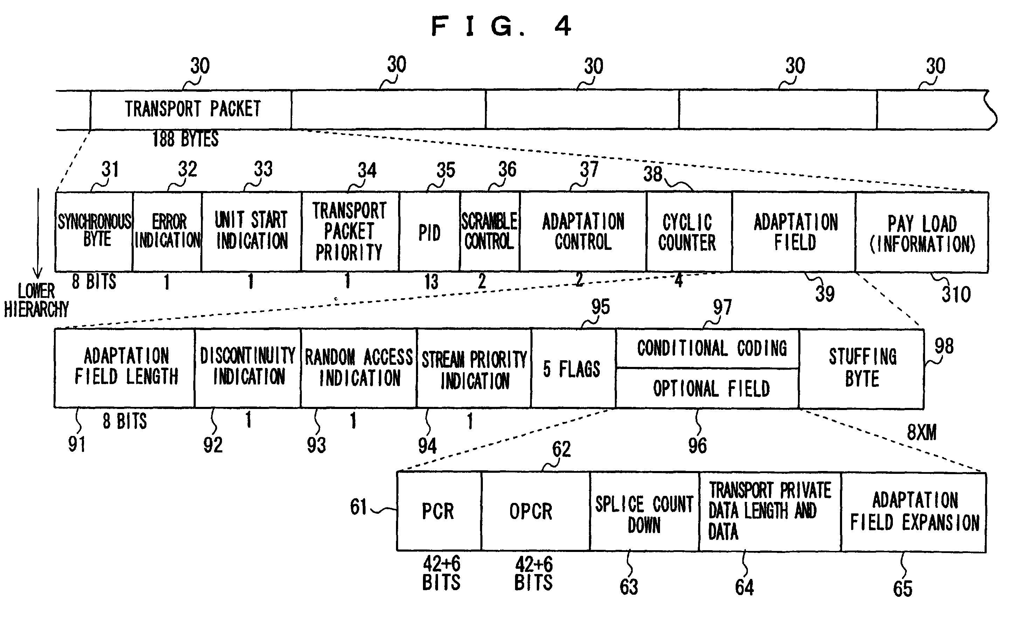

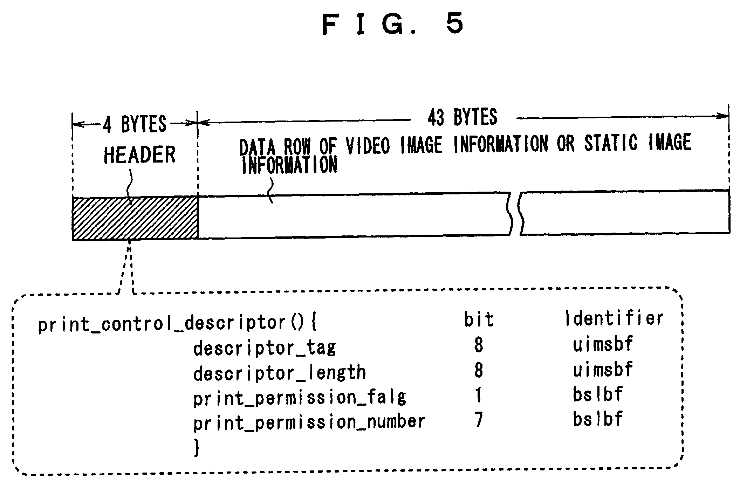

Fig. 4 is an image diagram showing an exemplary data structure of MPEG2-TS into which a print control descriptor is written according to each embodiment of the present invention. Fig. 5 is a diagram showing an exemplary data structure of the print control descriptor.

In this embodiment, the print control descriptor is written into a header of a general purpose image format such as MPEG-TS for transmitting the MPEG video image information. In the data structure of MPEG-TS of Fig. 4, a data area of 188 bytes is allocated to one transport packet 30, in order to transmit a plurality of encoded data of the MPEG video image information. The transport packet 30 has a hierarchical structure, and a data area with 10 pieces of information is allocated to its lower hierarchy. Specifically, into the data area, the following 10 pieces of information are written: a synchronous byte 31 with 8 bits; an error indication 32 with 1 bit; a unit start indication 33 with 1 bit; a transport packet priority 34 with one bit; a packet identifying information (PID)35 with 13 bits; scramble control 36 with 2 bits; an adaptation control 37 with 2 bits; a cyclic counter 38 with 4 bits; an adaptation field 39; and a pay load 310.

To the lower hierarchy of the adaptation field 39, a data area with 7 pieces of information is allocated. Specifically, into the data area, the following 7 pieces of information are written: an adaptation field length 91 with 8 bits; a discontinuity indication 92 with 1 bit; a random access indication 93 with 1 bit; a stream priority indication 94 with 1 bit; 5 flags 95; an optional field 96; a conditional field 97; and a stuffing byte 98 with 8 bits.

To the lower hierarchy of the optional field 96, a data area with 5 pieces of information is allocated. Specifically, in the data area, the following 5 pieces of information are written: a program clock reference (PCR) 61 with 42+6 bits, an original PCR 62 with 42+6 bits; a splice count down 63 with 8 bits; a transport private data length and data 64; and an adaptation field expansion 65.

When the transport packet 30 with 188 bytes is transmitted, it is divided into four asynchronous transfer mode (ATM) packets (cells) to form 4 bit streams with 47 bytes respectively. To the front area of each bit stream, a writing area with 4 byte is added for writing header information as shown in Fig. 5. Into the writing area, header information consisting of a program clock reference (PCR), a presentation time stamp (PTS) for reproduction output, and a decoding time stamp (DTS) for decoding are written as header information generated by multiplexing the MPEG-TS. The header information is written in such a manner that its data rows are continued in a correct arrangement.

Into the header with 4 bytes shown in Fig. 5, a print control descriptor is written. To the print control descriptor, 8 bits are allocated as a description tag data, and its bit identifier is "uimsbf". The data length of the description tag is shown by 8 bits, and its bit identifier is "uimsbf". In this embodiment, 1 bit is allocated to the print permission flag (P.P.F), and its bit identifier is "bslbf". When "1" is written into the print permission flag, "permission to print the static image" is shown. When "0" is written into the print permission flag, "non-permission to print the static image" is shown. In addition, 7 bits are allocated to the print permission number (PPN), and its bit identifier is "bslbf".

Next, an exemplary processing performed by the static image printout system 101 according to the first embodiment will be described. In the description, the flowchart of Fig. 2 and the assumptions previously described are employed. In the static image printout system 101, in step A1 in the flowchart of Fig. 2, the video image information including the print control descriptor is provided from the video image information provider side to the video image information user side through the digital satellite broadcasting network. The video image information is sent to the video image information user after being multiplexed into MPEG compressed data rows. The digital satellite radio wave for the MPEG compressed data rows is received by the antenna 11 of Fig. 3, and is captured by the set box 21. In the set box 21, the MPEG compressed data rows (MPEG video image information) of a desired channel among a plurality of channels which are multiplexed beforehand are multiplexed and separated by the multiplex separator 12. In this manner, the MPEG video image information to which the print control descriptor is added is multiplexed and separated from the MPEG data rows.

After that, the visual image information user extracts an arbitrary static image 10 from the video image information in step A2. The visual image information user selects a scene and defines it as the static image 10, and then designates the selected scene to the CPU 16 by use of a user's interface 17. In this manner, the static image extracted from the MPEG video image information can be displayed on the monitor 15.

Then, at the visual image information user side, the print control descriptor added to the MPEG video image information is decoded by the CPU 16 in step A3 to detect the print permission flag and the print permission number N of the static image 10. The print permission flag of "1" and the print permission number N of "10" are temporarily stored in the RAM 16A within the CPU 16.

After that, in step A4, CPU 16 determines whether or not the print permission flag of "1" is detected. This determination is made by comparing the print permission flag after decoding with the reference data (expected data) provided to the CPU 16 beforehand to see whether or not they coincide with each other. Therefore, when the print permission flag of "1" is detected, the printer 19 is permitted to print out the static image 10, and the procedure proceeds to step A5.

In this embodiment, since the print permission flag of "1" is detected in step A4, the procedure proceeds to step A5 where the print permission signal S0 and the static image information D OUT are multiplexed (combined together) and output from the CPU 16 to the printer 19 through the print buffer 18. Therefore, the printer 19 is operated to print out the static image 10 of the scene extracted by the visual image information user. After that, in step A6, the CPU 16 determines whether or not "1" has been subtracted from the print permission number N. This determination is conducted by comparing the print permission number N with the remaining number plus the print number to see whether they coincide with each other.

When the print number, which in this exemplary embodiment is "1," has not been subtracted from the print permission number N of "10", the procedure proceeds to step A7 where "1" is subtracted from the print permission number N. Then, the procedure proceeds to step A8 where it is determined whether or not the print control for the static image 10 should be finished. This determination is made according to the instruction from the visual image information user. In this embodiment, if all the print permission number N of "10" will be used, the procedure is returned to step A2 to use the remaining print permission number N of "9" and the visual image information user designates the next scene to be extracted to CPU 16.

In the case where the CPU 16 is designated so that all of 10 of the extracted scenes are printed in step A2 beforehand, the procedure jumps to step A5 where the printer 19 can be operated to continuously print out the static images 10. In this embodiment, "0" is rewritten into the print permission flag at the time when the print permission time N becomes "0". Therefore, if no print permission flag is detected at the time when the print permission number N becomes "0" in step A4, for example, if the print permission flag of "0" is written, the printout of the static image 10 is inhibited. In this case, the procedure proceeds to step A9 where a processing other than the printout of the static image is conducted and the procedure is finished. The static image information D OUT for the extracted scene for which print permission number of "10" or more is designated in step A2 is only displayed on the monitor 15.

As described above, in the static image printout system 101 according to the first embodiment of the present invention, when the print permission flag of "1" or "0" added to the MPEG video image information is detected by the CPU 16, the printer 19 is permitted or is not permitted to print out the static image based on the print permission flag. The print permission signal S0 is output from the CPU 16 to the printer 19 in step A5 only in the case where the visual image information provider side writes the print permission flag of "1" into the print control descriptor. With this arrangement, the visual image information user side can obtain the static image 10 of the extracted scene which he or she designated beforehand (the image extracted from the MPEG video image information) as a printed matter printed on a specified paper.

Examples of the printed matter on which the static image is printed include various gift tickets (i.e. coupons), admission tickets for various kinds of entertainment, travel tickets (airline tickets), and copied pictures (including pictures of characters). The static image printout system 101 is applicable to the contents distribution media where these printed matters are sold in tele-shops or internet-shops. In the case where the print permission flag of "0" is written into the print control descriptor by the visual image provider side, the printout of the static image is inhibited even though the selected scene is designated by the visual image information user side. In this manner, the copyright of the visual image information provider for the MPEG video image information can be protected. In addition, since the print permission number N is subtracted by 1 every time the static image 10 is printed, the static image is never printed out beyond the print permission number N.

### (3) Second embodiment

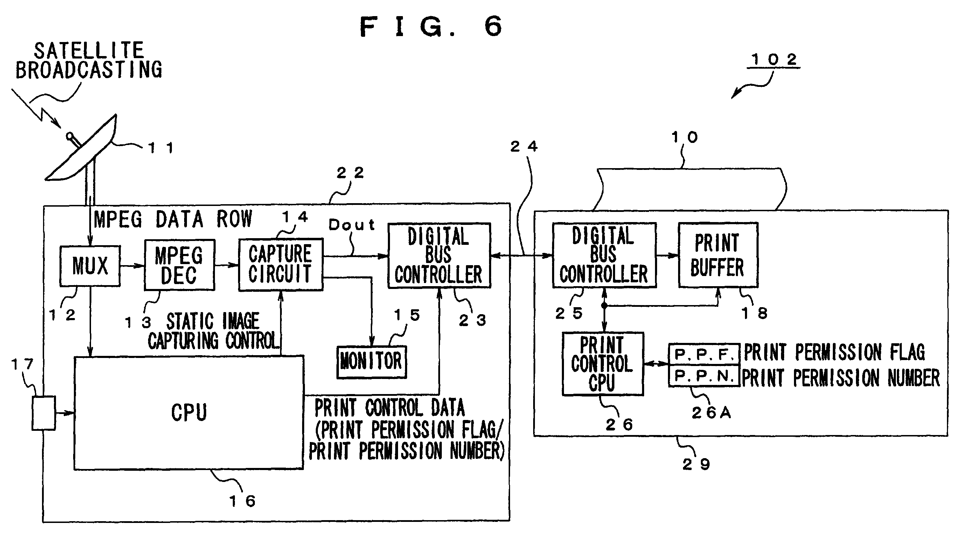

Fig. 6 is a block diagram showing an exemplary structure of the static image printout system 102 according to the second embodiment of the present invention.

In this embodiment, the set box 22 includes a data restructuring device for restructuring the static image information in a specified image format to which a print control descriptor is added. The set box 22 and a printer 29 have an interface for sending and receiving the restructured static image information to which the print control descriptor is added.

The static image printout system 102 of Fig. 6 includes the set box 22. The set box 22 includes an antenna 11, a multiplex separator (MUX) 12, an MPEG decoder 13, a capture circuit 14, a monitor 15, a CPU 16, a user interface 17, and a digital bus controller 23. In the set box 22, the print control data output from the CPU 16 is multiplexed to be restructured into data in a specified image format.

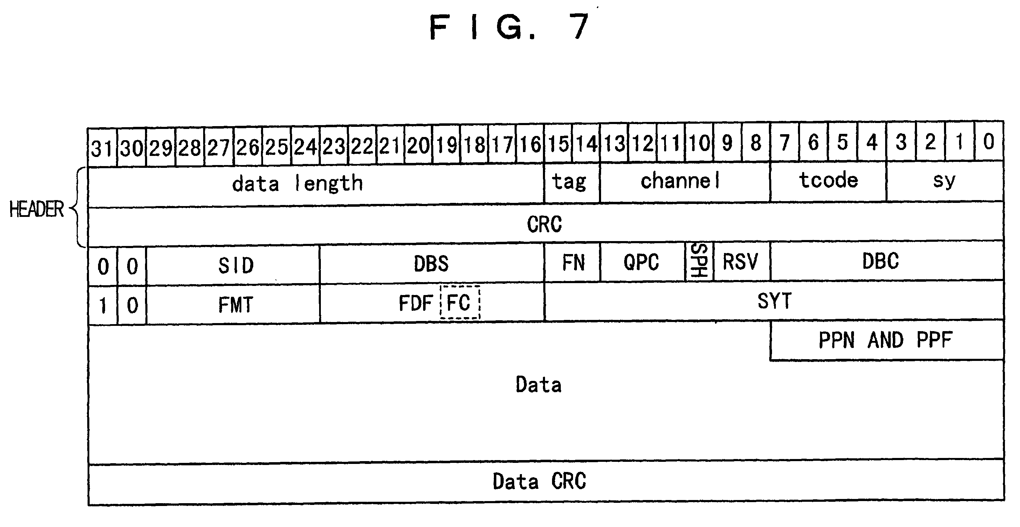

The print control data is static image information in a specified image format to which a print control descriptor is added. A print permission flag and a print control number are written in the print control descriptor. An exemplary data structure after restructuring will be described referring to Fig. 7. Referring again to Fig. 6, the digital bus controller 23 has an interface function, and the static image information to which a print control descriptor is added after restructuring, is sent through a communication device designed in accordance with a specified transmission protocol. As the communication device, a high speed digital bus 24 designed in conformance with the communication protocol of IEEE 1394 (hereinafter, simply referred to as a communication cable) is used. The constituent elements denoted by identical reference numerals and names to those of the first embodiment have the same functions, and the description thereof will be omitted.

A printer 29 with a bus controlling function is connected via the communication cable 24 to the set box 22. The printer 29 manages the print control data sent from the set box 22 and includes a digital bus controller 25 with the same function as the digital bus controller 23, a printing buffer 18 circuit, a CPU 26 for print control, and a RAM 26A.

For example, when a print control data consisting of the static image information with a specific image format to which the print control descriptor is added is received by the digital bus controller 25, the print control data is multiplexed and separated into the print control descriptor and the static image information. The static image information after the multiplex separation is temporarily stored in the printing buffer 18. The print control descriptor is output to the CPU 26 for print control.

In the CPU 26, the print permission flag for the static image 10 is detected from the print control descriptor added to the static image information. In this embodiment, a RAM 26A is connected to the CPU 26. The print permission flag (PPF) and the print permission number (PPN) are written into the RAM 26A, When "1" is written into the print permission flag, "permission in print out the static image" is shown. When "0" is written into the print permission flag, "non-permission to print our the static image" is shown. In the case where the print permission flag is "1" and the print permission number N is larger than "0" (N>0), "0" is rewritten into the print permission flag when the print permission number N becomes "0".

Next, an exemplary structure of the static image high speed transmission data according to an embodiment of the present invention will be described, Fig. 7 is an exemplary image diagram illustrating a structure of the static image high speed transmission data according to an embodiment.

In this embodiment, an interface for sending and receiving the static image information to which a print control descriptor is added after data restructuring (hereinafter, referred to as a static image high speed transmission data) is provided to the set box 22 and the printer 29 of Fig. 6 respectively. These interfaces are connected to each other by a communication cable 24 designed in conformance with the communication protocol of IEEE 1394.

The static image high speed transmission data after the restructuring, designed in conformance with the communication protocol of IEEE 1394, has a data structure shown in Fig. 7. Fig. 7 is a diagram showing a part of the isochronous transfer packer used for the aforesaid isochronous transfer. A header is assigned to this packet, which occupies 32 x 2 bits from front and includes synchronizing pattern sy, packet code tcode, channel, tag, data length, error correction code CRC, and the print permission flag and print permission number N. To the subsequent 32 bits are assigned count value of successive packets DBC when data of a fixed size are divided to be assigned to each packet, Reserve RSV, Marker SPH indicating whether there is a source packet header or not, Divisional number of source packet FN, Data block size DBS, Identification code of its own SID and so on. The further subsequent bits are assigned to Recording area SYT such as a time stamp, Sampling frequency FDF of transmitted data, Transmission format FMT and so on. The still further subsequent area is assigned to the transmitted data, which is the actual image information for the static image, made of source data with 32 bits as a unit, and their error correction code CRC is added to its end.

Additionally, in the present example, one bit at a specific position in the area of Sampling frequency FDF made of eight bits (one bit at a position surrounded by a broken line in Fig. 7) is used for adding a flag FC indicating that the transmission rate of the signal is being controlled. If this flag is "1" signal, it indicates that a mode in which the transmission rate is controlled is entered. If the flag FC is "0" signal, it indicates that a mode in which the transmission rate is not controlled is entered.

Next, an exemplary processing performed by the static image printout system 102 according to the second embodiment will be described. In this embodiment, it is essential that digital bus controllers 23 and 25 with an interface are provided to set box 22 and printer 29 respectively, and these interfaces are connected to each other by a communication cable 24 designed in conformance with IEEE 1394.

For example, in the set box 22, as in the case of the first Embodiment, the MPEG video image information is received by an antenna 11, and is processed by a multiplex separator 12 and an MPEG decoder 13 and the like. Then, further processing is conducted through a capture circuit 14, a CPU 16 and a users' interface 17 to extract a scene from the MPEG video image information in accordance with the preference of the visual image information user. The extracted scene is displayed on a monitor 15.

The print control data containing the print permission signal S0 output from the CPU 16 is multiplexed by the digital bus controller 23, and is restructured into the data in a specified image format shown in Fig. 7. The static image high speed transmission data after restructuring is output from the digital bus controller 23 and is captured by the printer 29 through the communication cable 24.

Upon receipt by a digital bus controller 25 in the printer 29, the static image high speed transmission data is multiplexed and separated into the print control descriptor and the static image information. The static image information after the multiplex separation is temporarily stored into a print buffer 18. The print control descriptor is output to CPU 26 for print control.

In the CPU 26, the print permission flag for the static image 10 is detected from the print control descriptor added to the static image information, and the print permission signal S0 is detected. In this embodiment, the print permission flag (PPF) and the print permission number (PPN) N are written into a RAM 26A connected to the CPU 26. When the print permission flag of "1" is detected, the printer 29 is permitted to print out the static image 10. Then, the print permission signal S0 and the static image information are output from the CPU 26 to the printer 29 through the print buffer 18.

The printer 29 is operated to print out the static image 10 of the scene extracted by the visual image information user. After that, the CPU 26 determines whether or not "1" is subtracted from the print permission number N. This determination is made by comparing the print permission number N with the remaining number plus the print number to determine whether they coincide with each other. The print permission flag and the print permission number N may be managed by the CPU 16 in the set box 22 simultaneously.

When "1" has not been subtracted from the print permission number N, which in the exemplary embodiment is "10", "1" is subtracted from the print permission number N. After that, the CPU 16 in the set box 22 determines whether or not the print control for the static image 10 is finished. This determination is made according to the instruction to the CPU 16 from the visual image information user. If all the print permission number N of "10" will be used, the visual image information user designates the next scene to be extracted to the CPU 16 in order to use the remaining print permission number N of "9".

In the case where the CPU 16 is designated so that all 10 of the extracted scenes are printed beforehand, the CPU 16 sends the static image high speed transmission data after restructuring to the printer 29 to instruct it to continuously print out 10 static images 10 for the extracted scenes. In this embodiment, "0" is rewritten into the print permission flag at the time when the print permission number N becomes "0". Therefore, when the print permission flag of "0" is written, the printout of the static image 10 is inhibited.

As described above, in the static image printout system according to the second embodiment, the digital bus controllers 23 and 25 with an interface are provided to the set box 22 and the printer 29 respectively, and these interfaces are connected to each other by the communication cable 24 designed in conformance with IEEE 1394.

Therefore, when the print permission flag of "1" or "0" for the static image 10 is detected from the print control descriptor added to the static image information by the CPU 26 after restructuring, the printer 29 is permitted or is not permitted to print out the static image 10 based on the print permission flag for the static image 10. That is, the CPU 26 outputs the print permission signal S0 to the printer buffer 18 only in the case where the visual image information provider side writes the print permission flag of "1" into the print control descriptor. With this arrangement, the visual image information user side can obtain the static image 10 of the extracted scene which the user designated beforehand.

Therefore, when the visual image information provider side writes the print permission flag of "0" into the print control descriptors the printout of the static image is inhibited even though the extracted scene is designated in the set box 22 by the visual image information user side. In this manner, the copyright of the visual image information provider for the video image information or static image information is protected. In addition, since the print permission number N is subtracted by 1 every time the static image 10 is printed, the static image is never printed out beyond the print permission number N.

### (Third embodiment)

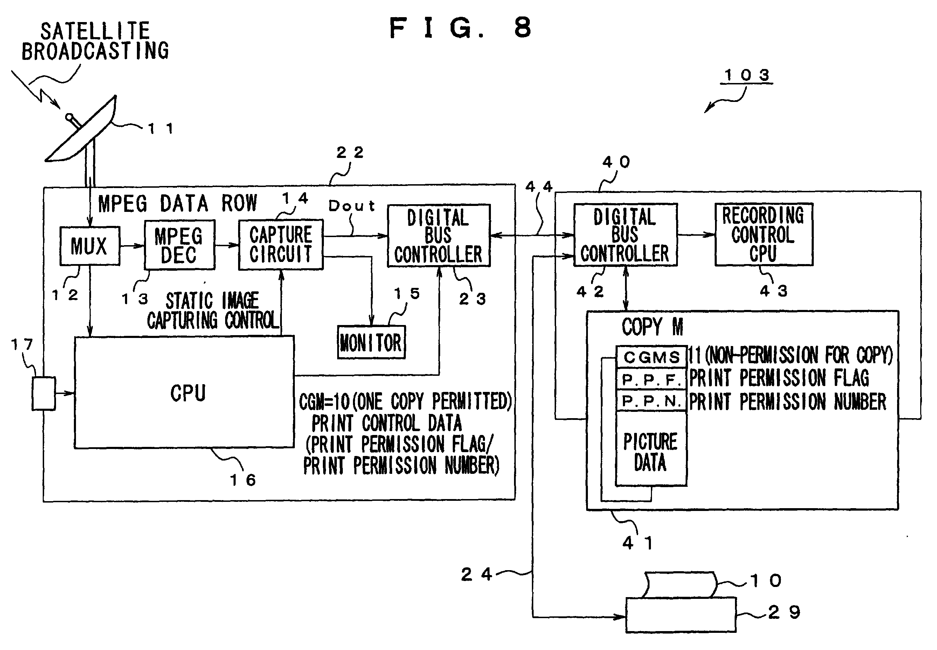

Fig. 8 is a block diagram showing an exemplary structure of the static image printout system 103 according to a third embodiment of the present invention.

In this embodiment, the static image printout system 103 is intended for use in the following two cases. In one case (first case), as shown in Fig. 8, a static image recording and reproducing device 40 is connected to a set box 22. The static image information for the scene selected and designated by the visual image information user in accordance with the user's preference beforehand, and the print control descriptor added thereto are recorded in a recording medium 41. Then, the static image is printed out by a printer 29. In the other case (second case), the video image information or the static image information received by the set box 22 is entirely recorded in the record media 41. At a later time, the video image information or the static image information is displayed on a monitor 15 in the set box 22, and the visual image information user selects and designates a particular scene. Then, the static image of the selected and designated scene is printed out by the printer 29.

In this embodiment, a copy control descriptor is added to the video image information or the static image information together with the print control descriptor. The copy control descriptor is information for permission or non-permission to copy the visual image or static image 10.

### (1) First case

The static image printout system of Fig. 8 includes the set box 22 of the same type as that used in the second embodiment, the static image recording and reproducing device 40 is connected to the set box 22 as an example of the visual image recording and reproducing device. The set box 22 includes a digital bus controller 42 with the same function as that of the digital bus controller 23 with an interface used in the second embodiment.

The set box 22 is connected to the static image recording and reproducing device 40 via a high speed digital bus (communication cable) 44 in conformance with a communication protocol of IEEE 1394. In the first case, the copy control descriptor is added to the visual image information or the static image information, and the copy permission number M is managed in such a manner that the copy permission number M is subtracted every time the visual image information or static image information is copied once. At this time, the information is controlled by the CPU 16 in the set box 22 and the static image recording and reproducing device 40 in order to prevent unauthorized copy and printing.

In the first case, CGMS of "10" for indicating the copy permission number M of "1" (i.e. permission for copy once), the print permission flag (PPF), and the print permission number (PPN) are output from the CPU 16 to the digital bus controller 23 in the set box 22. The capture circuit 14 in the set box 22 outputs static image information D OUT for the scene extracted and designated by the visual image information user beforehand in accordance with the user's preference. The static image information D OUT is restructured into data rows satisfying a specified transmission protocol, and the resultant static image high speed transmission data after restructuring is transmitted to the static image recording and reproducing device 40.

The static image recording and reproducing device 40 includes a recording media 41 as an example of an information providing medium, and the recording media 41 includes a CPU 43 for record control. The static image recording and reproducing device 40 records the static image high speed transmission data sent from the set box 22. As the recording media 41, an magneto-optic disc is used.

When the static image high speed transmission data consisting of the static image information in a specified image format to which the print control descriptor and the copy control descriptor are added is received by the digital bus controller 42, the static image high speed transmission data is multiplexed and separated into the print control descriptor and copy control descriptor, and the static image information. The static image information after multiplex separation (picture data) is recorded into the recording media 41. The print control descriptor and the copy control descriptor are output to the CPU 43 for record control.

The CPU 43 detects the print permission flag for the static image 10 from the print control descriptor added to the static image information, and also detect, "permission for copy once" from the copy control descriptor. In the first case, since the recording media 41 is connected to the CPU 43 via the digital bus controller 42, the copy permission number M, the print permission flag (PPF) and the print permission number (PPN) N are written into the record media 41 before or after the static image information is recorded. Since CGMS of "10", meaning the copy permission number of "1" ("permission for copy once"), is originally written in the record media 41, CGMS of "11", meaning "non-permission for copy", is rewritten into the record media 41.

In the first case, various kinds of information are recorded into the static image recording and reproducing device 40, and after that, the static image is printed out by the printer 29. In accordance with the assumption employed in the second embodiment, the print permission flag of "1" is written into the header of the static image information to show "permission to print out the static image". In the case where the print permission flag is "1" and the print permission number N is larger than "0", the print permission number N, which in this exemplary embodiment is "10," is written into the header of the static image information.

The printer 29 of the same type as that used in the second embodiment is connected in the form of daisy chain via the communication cable 24 to the digital bus controller 42 in the static image recording and reproducing device 40. The print control descriptor is added to the static image, and the visual image recording and reproducing device 40 decreases the print permission number N by one each time the static image 10 is printed out by the printer 29. The operation of the printer 29 is the same as that of the second embodiment, and its description is omitted. At the same time, the static image information to which the copy control descriptor and print control descriptor are added is restructured.

### (2) Second case

The static image printout system 103 of Fig. 8 includes a video image recording and reproducing device (not shown) as an example of the visual image recording and reproducing device. The video image recording and reproducing device also includes a digital bus controller having the same function as the digital bus controller 23 with an interface function disclosed in the second embodiment.

The video image recording and reproducing device is connected to the set box 22 via the high speed digital bus (communication cable) in conformance with a communication protocol of IEEE 1394. In the second case, the copy control descriptor is added to the video image information, and the copy permission number M is decreased by one each time the static image 10 extracted from the video image information is copied. At this time, the information is controlled by the CPU 16 in the set box 22 and the video image recording and reproducing device in order to prevent unauthorized copy and printing.

In the second case, CGMS of "00" for indicating the copy permission number M of "∞" (unlimited copying), the print permission flag (PPF) and the print permission number (PPN) are output from the CPU 16 to the digital bus controller 23. From the capture circuit 14, the video image information or static image information D OUT is output without undergoing the capturing processing.

These kinds of information are restructured into data rows satisfying a specified transmission protocol by the CPU 16 and the digital bus controller 23. The resultant video image high speed transmission data or static image high speed transmission data after restructuring is recorded in the video image recording and reproducing device. This processing is conducted taking into consideration the case where the video image information or static image information is read from the recording media 41 at a later time and displayed on the monitor 15 to enable the visual image information user to select and designate a scene from the display on the monitor 15, printer 29 prints out the selected and designated scene.

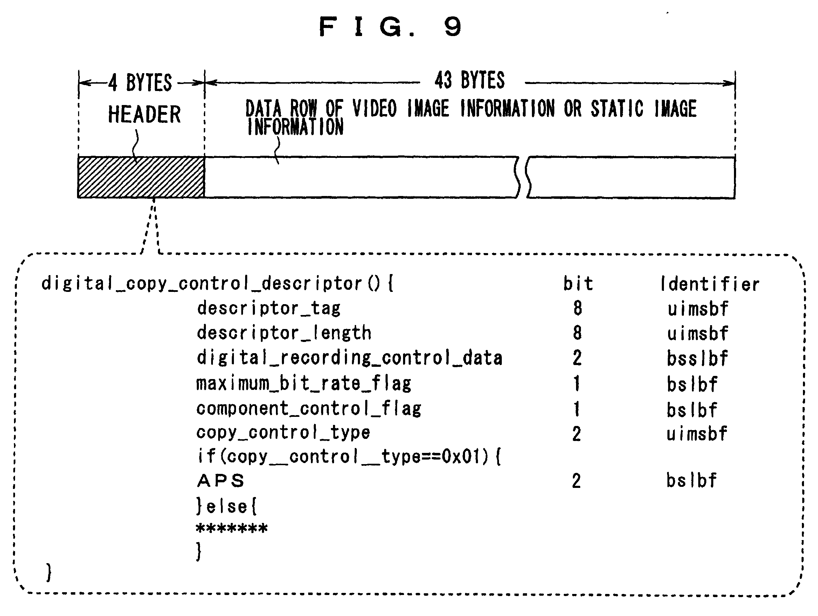

Fig. 9 is a diagram showing an exemplary data structure of a digital copy control descriptor (copy control descriptor). In this embodiment, the copy control descriptor is written into the header of a general purpose image format such as MPEG-TS for transmitting video image information or static image information.

In this embodiment, a copy control descriptor is written into the header with 4 bytes. In addition, 8 bits are allocated to a description tag data, and its bit identifier is "uimsbf". The data length of the description tag is shown by 8 bits, and its bit identifier is "uimsbf". In addition, 2 bits to several tens of bits are allocated to the digital recording control data, and its bit identifier is "uimsbf".

For example, permission to copy freely is indicated by the digital recording control data of "00." Non-permission for copying is indicated by the digital recording control data of "11." Permission for copying once is indicated by the digital recording control data of "10." The digital recording control data of "01" is a reserve. One bit is allocated to the maximum bit rate flag of the copy control descriptor, and its bit identifier is "uimsbf". One bit is allocated to the component control flag, and its bit identifier is "uimsbf."

To the copy control type of the copy control descriptor, 2 bits are allocated and its bit identifier is "uimsbf." In addition to these kinds of information, an additional sentence (an "if" clause) of 2 bits is written and its identifier is "bslbf." The copy control descriptor having these kinds of information is written into the header of bit streams of four ATM packets (i.e., cell) with 47 bytes obtained by dividing the transport packet 30 with 188 bytes into four packets.

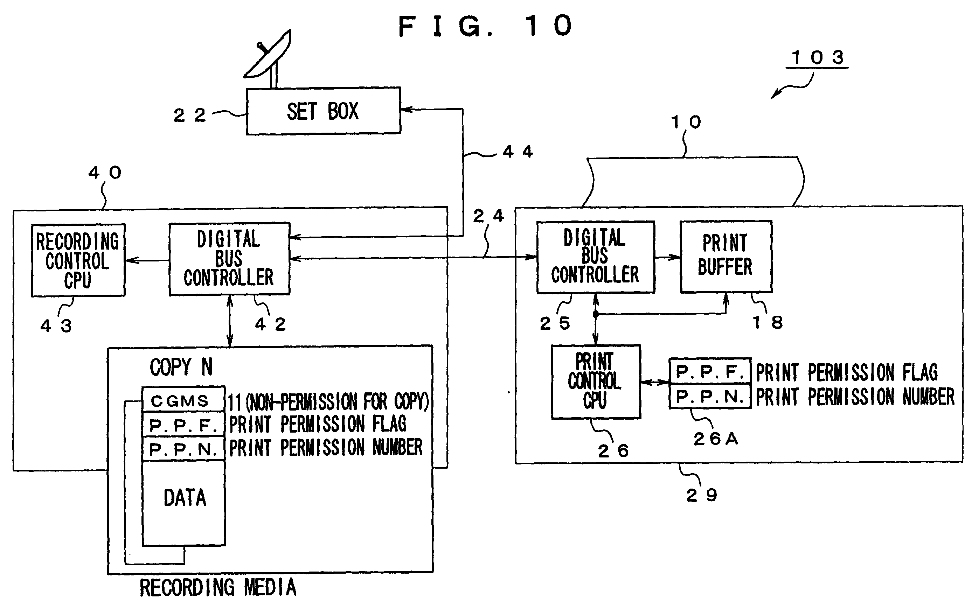

Next, an exemplary processing for printing out the static image performed by the static image printout system 103 in the first case and second case according to the third embodiment will be described. Fig. 10 is a diagram showing an exemplary structure of the static image printout system 103 at the time of printing out the static image according to the third embodiment.

In this embodiment, the static image printout system 103 is intended for use in the following two cases. In one case (the first case), the static image information for the scene selected and designated by the visual image information user in accordance with the user's preference, and the print control descriptor thereof, are read from a recording media 41 and are reproduced. Then, the static image is printed out by a printer 29. In the other case (the second case), the visual information or static image information is read from the recording media 41 and is reproduced. The video image information or static image information is then displayed on a monitor 15 in a set box 22 to enable the visual image information user to select and designate a scene by viewing monitor 15. Then, the static image of the selected scene is printed out by the printer 29.

It is essential that, as shown in Fig. 10, the set box 22, printer 29 and static image recording and reproducing device 40 have digital bus controllers 23, 25, 42 with an interface respectively, and these interfaces are connected to each other by communication cables 24, 44 designed in conformance with IEEE 1394 in the form of a daisy chain. In the second case, a video image recording and reproducing device is used instead of the static image recording and reproducing device 40.

### (1) First case

In the static image printout system 103 of Fig. 10, the static image recording and reproducing device 40 serves as a static image printout control device. For example, the recording media 41 is incorporated into the static image recording and reproducing device 40, and the static image information is reproduced from the recording media 41. As a result of this reproduction, the static image information for the scene selected and designated by the visual image information user and the print control descriptor thereof, are restructured into data satisfying a specified transmission protocol in the static image recording and reproducing device 40. The resultant static image high speed transmission data after restructuring is transmitted to the printer 29.

In the printer 29, as is the case of the second embodiment, the static image high speed transmission data after the restructuring is received by a digital bus controller 25, and is multiplexed and separated into the print control descriptor and the static image information. The static image information after the multiplex separation is temporarily stored in a print buffer 18. The print control descriptor is output to a CPU 26 for print control.

The CPU 26 detects the print permission flag for the static image 10 from the print control descriptor added to the static image information, and detects the signal permission signal S0. In this embodiment, the print permission flag (PPF) and the print permission number (PPN) N are written into a RAM 26A connected to the CPU 26. When the print permission flag is detected, the printer 29 is permitted to print out the static image 10. In this case, for example, the print permission signal S0 and the static image information are read from the print buffer 18, and then are input into printer 29.

As a result, the printer 29 prints out the static image 10 of the scene selected by the visual image information user. In the CPU 26, "1" is subtracted from the print permission number N, and the result of this subtraction is sent to the static image recording and reproducing device 41 through a bilateral communication by communication cables 24, 44. In synchronization with this, the print permission number N on the recording media 41 is updated.

The communication such as that described above makes it possible to correctly manage the print number so that total possible print number for the static image never exceeds the print permission number, even in the case where the printer is exchanged for another printer. In the case where the print permission flag is "1" and the print permission number N is larger than "0", "0" is rewritten into the print permission flag by the CPU 26 at the time when the print permission number N becomes "0" in the printer 29.

Next, it is determined whether or not the print control for the static image 10 is finished by the CPU 16 in the set box 22. This determination is made according to the instruction for "finishing the print control for the static image 10" from the visual image information user to the CPU 16.

### (2) Second case

In the static image printout system 103 of Fig. 10a, a video image recording and reproducing device is used instead of the static image recording and reproducing device 40. The video image recording and reproducing device serves as a static image print control device. However, there is no need to use the video image recording and reproducing device if the static image recording and reproducing device 40 has a function of recording and reproducing a video image. In the second case, for example, the video image information is recorded in a recording media 41 beforehand, and the recording media 41 is incorporated into the video image recording and reproducing device. The video image information recorded beforehand and the print control descriptor thereof are restructured into a data satisfying a specified transmission protocol in the video image recording and reproducing device. The resultant high speed video image data after restructuring is transmitted to the set box 22, and the video image information thereof is displayed on a monitor 15 in a set box 22.

Therefore, when the visual image information user designates the scene selected in accordance with his or her preference to the CPU 16 by use of a user interface 17, the CPU 16 outputs the print control data containing the print permission signal S0 to a digital bus controller 23 where the print control data is multiplexed and is restructured into a data in a specified image format shown in Fig. 7. The resultant static image high speed transmission data after restructuring is sent from the digital bus controller 23 of Fig. 9 to the printer 29 via a communication cable 24 designed in conformance with IEEE 1394.

As is conducted in the first case, the static image high speed transmission data after restructuring is received by the digital bus controller 25 in the printer 29, and is multiplexed and separated into the print control descriptor arid the static image information in the digital bus controller 25. The static image information after multiplex separation is temporarily stored in a print buffer 18. The print control descriptor is output to the CPU 26 for print control.

In the CPU 26, as is in the first case, the print permission flag for the static image 10 is detected from the print control descriptor added to the static image information, and the print permission signal S0 is detected. In this embodiment, the print permission flag (PPF) and the print permission number (PPN) N are written into a RAM 26A connected to the CPU 26.

Then, it is determined whether the print permission flag is detected by the CPU 26. When the print permission flag is detected, the printer 29 is permitted to print out the static image 10. In this case, for example, the print permission signal S0 and the static image information are read from the print buffer 18, and are input into the printer 29.

As a result, the printer 29 is operated to print out the static image 10 of the scene selected and designated by the visual image information user. In the CPU 26, "1" is subjected from the print permission number N, and the result of this subtraction is sent to the video image recording and reproducing device through a bilateral communication by communication cables 24, 44. In synchronization with this, the print permission number N on the recording media 41 is updated. The communication such as described above makes it possible to correctly manage the print number so that total possible print number never exceeds the print permission number as is conducted in the first case.

As described above, in the static image printout system 103 according to the third embodiment, the printer 29, static image recording and reproducing device 40 or video image recording and reproducing device is connected to the set box 22 via the communication cables 24, 44 designed in conformance with IEEE 1394 as shown in Fig. 8. The static image information for the scene selected and designated by the visual image information user, and the print control descriptor thereof are recorded in the recording media 41 beforehand. After that, if permitted, the static image is printed out by the printer 29. Alternatively, the video image information or static image information is entirely recorded in the recording media 41 temporarily. At the later time, the video image information or static image information is displayed on the monitor 15 in the set box 22 to enable the visual image information user to designate a scene by viewing the monitor 15., The static image for the scene selected and designated by the visual image information user is then printed out by the printer 29.

In contrast, when the print permission flag of "0" is written in the print control descriptor for the static image by the visual image information provider side, the printout is inhibited regardless of the printing time and period, even though the visual image information user selects and designates a scene in the set box 22 and intends to print out the static image thereof in the above-described system. With this arrangement, the copyright of the visual image information provider for the static image extracted from the video image information or static image information is preserved. In addition, since "1" is subtracted from the print permission number N every time the static image 10 is printed, the static image 10 is never printed out beyond the print permission number N.

In the first to third embodiments, the static image is extracted from the MPEG video image information. The present invention is also applicable to the static image data service where the static image is extracted from the still or static image information and is printed out, and to the case where the static image is extracted from JPEG static image information and is printed out. In the first to third embodiments, it is also possible to protect the copyright of the visual image information provider for the video image information or static image information by conducting copy control over the recording media 41 by CGMS or by recording the video image information or static image information to which the print control descriptor is added into the recording media 41.

As described above, the static image printout system according to the present invention includes a static image printout control device for detecting the print permission information for the static image from the print control descriptor added to the video image information or static image information, and for controlling the printout of the static image based on the print permission information therein.

With this arrangement, the printer is permitted to print out the static image only when the the print permission information for the static image is written in the print control descriptor by the visual image information provider. When non-permission for the static image is written in the print control descriptor, the printout of the static image by the printer is inhibited. In this manner, the copyright of the visual image information provider for the video image information or static image information can be protected.

According to the method for printing out a static image of the present invention, when the print permission information is detected from the print control descriptor added to the video image information or static image information, the static image of an arbitrary scene extracted from the video image information beforehand or an arbitrary static image extracted from the still or static image information are printed out.

With this arrangement, it becomes possible to print out the static image at the visual image information user side only when the print permission is written into the print control descriptor by the visual image information provider side. When non-permission for printing out the static image is written in the print control descriptor by the visual image information user side, the printout of the static image is inhibited at the visual image information user side. In this manner, the copyright of the video image information provider side for the visual image information or static image information can be protected.

In the information providing medium of the present invention, the video image information or static image information to which print control descriptor is added as information for distinguishing whether or nor the printout of the static image is permitted is recorded. With this arrangement, the copyright of the visual image information provider for the video image information or static image information can be protected.

The present invention is preferable for use in a static image data service in which an arbitrary static image extracted from video image information and static image information in digital broadcasting media, and from video image information and static image information in digital recording media such as magneto-optical discs is printed out.

While the method and apparatus of the present invention have been described in terms of its presently preferred and alternate embodiments, those skilled in the art will recognize that the present invention may be practiced with modification and alteration within the spirit and scope of the appended claims. The specifications and drawings are, accordingly, to be regarded in an illustrative rather than a restrictive sense.

Further, even though only certain embodiments have been described in detail, those having ordinary skill in the art will certainly understand that many modifications are possible without departing from the teachings thereof. All such modifications are intended to be encompassed within the following claims.

## Claims

1. A static image printout system comprising:
a data providing medium for supplying video image data or still image data to which is added a print control descriptor for distinguishing whether or not printing of a static image extracted from the video image data or the static image data is permitted;
a printer for printing the static image extracted from the video image data or the still image data provided by the data providing medium and;
a static image print control apparatus for detecting from said print control descriptor a print permitting information permitting printing of the static image and for conducting printout control over the printer according to the print permitting information.

2. The static image printout system according to claim 1, wherein the static image print control apparatus comprises:
a detector for detecting the print permitting information from the print control descriptor added to the video image data or the static image data;
an extractor for extracting the static image from the video image data or the static image data; and
a controller for controlling the printer in such a manner that the printer prints out the static image extracted from the extractor according to the print permitting information detected by the detector.

3. The static image printout system according to claim 2, wherein the extractor comprises a capture circuit.

4. The static image printout system according to claim 1, wherein a print permission number is written into the print control descriptor when the print permitting information is written into the print control descriptor.

5. The static image printout system according to claim 4, wherein the print permission number is decreased when a static image is printed when the print permission number is written into the print control descriptor.

6. The static image printout system according to claim 5, wherein the print permitting information is rewritten to prohibit printing when the print permission number is decreased to zero.

7. The static image printout system according to claim 4, wherein the print permission number corresponds to a maximum number of static image printouts that are available, wherein the print permission number is decreased by each static image printout, and wherein an error signal is provided when the print permission number attempts to exceed the maximum number of static image printouts.

8. The static image printout system according to claim 1, wherein the video image data comprises MPEG data.

9. The static image printout system according to claim 1, further comprising a central processor having a memory, wherein the print permitting information arid the print permission number are stored in the memory.

10. The static image printout system according to claim 1, wherein a copy control descriptor as information for distinguishing whether or not copying of the video image data or the still image data is permitted is added to the video image data or the static image data.

11. The static image printout system according to claim 1, wherein the static image print control apparatus comprises:
a data restructuring apparatus for restructuring the video image data or the still image data to which the print control descriptor is added.

12. The static image printout system according to claim 1, further comprising:
a set top box and wherein the static image print control apparatus is provided in the set top box.

13. A static image printout system comprising;
a data providing medium for supplying video image data or still image data to which a print control descriptor is added as information for distinguishing whether or not printing of a static image extracted from the video image data or the still image data is permitted;
a data receiving apparatus for receiving the video image data or the still image data to which the print control descriptor is added and for restructuring the video image data or the still image data to output restructured video image data or restructured still image data to which information of the print control descriptor is added; and
a printer for detecting from the information of the print control descriptor a print permitting information permitting printing of a static image extracted from the restructured video image data or the restructured static image data provided by the data receiving apparatus and for printing the static image according to the print permitting information.

14. The static image printout system according to claim 13, wherein at least the data receiving apparatus and the printer each comprise an interface respectively for sending and alternatively for receiving the restructured video image data or the restructured static image data to which the information of the print control descriptor is added.

15. The static image printout system according to claim 14, wherein said interfaces include a specified transmission protocol to connect the interfaces to each other.

16. A static image printout system comprising:
a data providing medium for supplying video image data or still image data to which is added a print control descriptor as information for distinguishing whether or not printing of a static image extracted from the video image data or the static image data is permitted;
a data receiving apparatus for receiving the video image data or the still image data to which the print control descriptor is added and for restructuring the video image data or the still image data to output restructured video image data or restructured static image data to which is added the information of the print control descriptor;
a printer for printing a static image extracted from the restructured video image data or the restructured static image data; and
a data recording or reproducing apparatus for detecting from the information of the print control descriptor print permitting information permitting printing of a static image extracted from the restructured video image data or the restructured static image data provided by the data receiving apparatus and for conducting printout control over the printer according to the print permitting information.

17. The static image printout system according to claim 16, wherein at least the data receiving apparatus and the data recording or reproducing apparatus each comprises an interface respectively for sending and alternatively for receiving the restructured video image data or the restructured static image data to which the information of the print control descriptor is added.

18. A static image printout system according to claim 16, wherein a copy control descriptor is added to the video image data or static image data as information for distinguishing whether or not copying of the video image or the static image is permitted.

19. The static image printout system according to claim 18, wherein the copy control descriptor comprises a copy permission number permitting a predetermined number of copies of the video image data or the still image data.

20. The static image printout system according to claim 19, wherein the copy permission number is decreased when the video image data or the still image data is copied.

21. The static image printout system according to claim 17, wherein the printer is coupled to the data recording or reproducing apparatus, and the print permission number is decreased in the data recording or reproducing apparatus when the static image is printed by the printer.

22. The static image printout system according to claim 21, wherein the print permitting information is rewritten to prohibit printing when the print permission number is decreased to zero.

23. The static image printout system according to claim 21, wherein the print permission number corresponds to a maximum number of static image printouts that are available, wherein the print permission number is decreased by each static image printout, and wherein an error signal is provided when the print permission number attempts to exceed the maximum number of' static image printouts.

24. The static image printout system according to claim 16, wherein the video image data comprises MPEG data.

25. The static image printout system according to claim 16, further comprising a central processor having a memory, wherein the print permitting information and the print permission number are stored in the memory.

26. The static image printout system according to claim 16, wherein the print permission number is decreased in the printer when the static image is printed by the printer.

27. The static image printout system according to claim 16, wherein the data recording or reproducing apparatus includes a media to store the video image data or the still image data provided from the data providing medium.

28. The static image printout system according to claim 16, wherein the data providing medium comprises one or more of a CD-ROM, digital broadcasting media, a digital recording media, and one or more magneto-optical discs.

29. The static image printout system according to claim 24, further comprising:
a static image selecting apparatus for selecting a static image from the video image data or the still image data, wherein the data recording or reproducing apparatus stores the selected static image in the media.

30. The static image printout system according to claim 17, wherein the data recording or reproducing apparatus stores all the data of the video image data or the still image data provided from the data providing medium in the media.

31. A method for printing out a static image comprising the steps of:
supplying video image data or still image data to which is added a print control descriptor as information for distinguishing whether or not printing of a static image extracted from the video image data or the still image data is permitted;
detecting from said print control descriptor print permitting information permitting printing of the static image extracted from the video image data or the still image data;
printing the static image extracted from the video image data or the still image data according to the print permitting information.

32. The method for printing the static image according to claim 31, wherein a print permission number is also written into the print control descriptor when the print permitting information is written into the print control descriptor.

33. The method for printing the static image according to claim 32, wherein the print permission number is decreased when the static image is printed.

34. The method for printing the static image according to claim 33, wherein the print permission information is rewritten to prohibit printing when the print permission number is decreased to zero.

35. The method for printing the static image according to claim 32, wherein the print permission number corresponds to a maximum number of static image printouts that are available, wherein the print permission number is decreased by each static image printout, and wherein an error signal is provided when the print permission number attempts to exceed the maximum number of static image printouts.

36. The method for printing the static image according to claim 31, wherein the video image data comprises MPEG data.

37. The method for printing the static image according to claim 31, wherein a copy control descriptor as information for distinguishing whether or not copying of the video image data or the still image data is permitted is added to the video image data or the still image data.

38. The method for printing the static image according to claim 31, further comprising the step of restructuring the video image data or the still image data to which the print control descriptor is added.

39. An information providing medium for recording video image data or still image data to which a print control descriptor as information for distinguishing whether or not printing of a static image extracted from the video image data or the still image data is permitted is added.

40. The information providing medium according to claim 39, wherein a print permission number is written into the print control descriptor when print permitting information permitting printing of the static image is written into the print control descriptor.

41. The information providing medium according to claim 39, wherein a copy control descriptor as information for distinguishing whether or not copying of the video image data or static image data is permitted is added to the video image data or the still image data.

42. A static image printout system comprising:
a data providing apparatus for providing video image data or still image data to which print control information is added; and
a printer for detecting from the print control information a print permitting information permitting a static image extracted from the video image data or the still image data provided by the data providing apparatus to be printed and for printing the static image extracted from the video image data or the still image data according to the print permitting information.

43. The static image printout system according to claim 42, further comprising:
a data providing medium for providing video image data or still image data to which is added a print control descriptor as information for distinguishing whether or not printing of a static image extracted from the video image data or the static image data is permitted, and
wherein the data providing apparatus restructures the video image data or the still image data to provide the restructured video image data or the restructured still image data to the printer.

44. The static image printout system according to claim 42, wherein the data providing apparatus and the printer each comprises an interface respectively for sending and alternatively for receiving the restructured video image data or the restructured still image data to which the information of the print control descriptor is added.

45. The static image printout system according to claim 43, wherein a copy control descriptor as information for distinguishing whether or not copying of the video image data or the still image data is permitted is added to the video image data or still image data.

46. The static image printout system according to claim 45, wherein the copy control descriptor comprises a copy permission number permitting a predetermined number of copies of the video image data or the still image data.

47. The static image printout system according to claim 46, wherein the copy permission number is decreased when the video image data or the still image data is copied.

48. The static image printout system according to claim 43, wherein the print permitting information is rewritten to prohibit printing when the print permission number is decreased to zero.

49. The static image printout system according to claim 48, wherein the print permission number corresponds to a maximum number of static image printouts that are available, wherein the print permission number is decreased by each static image printout, and wherein an error signal is provided when the print permission number attempts to exceed the maximum number of static image printouts.

50. The static image printout system according to claim 42, wherein the video image data comprises MPEG data.

51. The static image printout system according to claim 42, further comprising a central processor having a memory, wherein the print permitting information and the print permission number are stored in the memory.
